# EUROPÄISCHE PATENTSCHRIFT

(11) **EP 3 814 170 B1**
(45) Veröffentlichungstag und Bekanntmachung des Hinweises auf die Patenterteilung: **27.04.2022**
(21) Anmeldenummer: 19734041.7
(22) Anmeldetag: 25.06.2019
(51) Int. Cl.: B60N 2/07

(54) **LÄNGSEINSTELLER SOWIE FAHRZEUGSITZ**
LONGITUDINAL ADJUSTER AND VEHICLE SEAT
DISPOSITIF DE RÉGLAGE EN LONGUEUR ET SIÈGE DE VÉHICULE

(30) Priorität: 29.06.2018 DE 102018115809; 11.09.2018 DE 102018122094
(43) Veröffentlichungstag der Anmeldung: 05.05.2021
(73) Patentinhaber: KEIPER Seating Mechanisms Co., Ltd., Shanghai 201315 (CN)
(72) Erfinder: QUAST, Ingo, 40477 Duesseldorf (DE); SPRENGER, Erik, 42929 Wermelskirchen (DE)
(74) Vertreter: Liedtke & Partner Patentanwälte
(86) Internationale Anmeldenummer: PCT/EP2019/066737
(87) Internationale Veröffentlichungsnummer: WO 2020/002274

(56) Entgegenhaltungen:
- DE-A1- 4 105 231
- DE-A1-102011 051 490
- DE-A1-102013 008 871

## Beschreibung

Die Erfindung betrifft einen Längseinsteller, insbesondere für einen Fahrzeugsitz, aufweisend mindestens ein Sitzschienenpaar, welches aus einer unteren Sitzschiene und einer relativ zur unteren Sitzschiene in Längsrichtung verschiebbar geführten oberen Sitzschiene gebildet ist, wobei sich die beiden Sitzschienen des Sitzschienenpaares einander wechselseitig umgreifen, sowie einen Fahrzeugsitz.

### Stand der Technik

Aus der JP 2005-67218 A ist ein gattungsgemäßer Fahrzeugsitz mit einem Längsverschiebemechanismus mit Endanschlägen zur Begrenzung des Verschiebeweges bekannt. Der Längsverschiebemechanismus weist Endanschläge zwischen einer oberen Schiene und einer unteren Schiene auf, wobei Begrenzungselemente der unteren Schiene und Begrenzungselemente der oberen Schiene auf denselben in Längsrichtung projizierten Teilbereichen angeordnet sind.

Aus der DE 41 05 231 A1 ist eine Längsverstellung eines Kraftwagensitzes bekannt, der mit mindestens einer sitzgestellfesten ersten Schiene und einer fahrzeugfesten zweiten Schiene versehen ist. Eine der Schienen weist beidendig eine aufsteckbare Anschlagkappe zur Begrenzung der Relativ-Verschiebebewegung der beiden Schienen zueinander auf.

Aus der DE 10 2013 008 871 A1 ist eine Verriegelungsvorrichtung für die Längsverstellung eines Fahrzeugsitzes bekannt, mit der eine erste Schiene relativ zu einer zweiten Schiene arretierbar ist und die ein Arretiermittel aufweist, das mit der einen Schiene verbunden ist und das zur Arretierung in eine Ausnehmung in der anderen Schiene reversibel eingreift.

Aus der DE 10 2005 047 452 A1 ist eine Verstelleinrichtung für einen Fahrzeugsitz bekannt, welche eine Blechstruktur mit mindestens einer Ausnehmung aufweist, welche mit einem Riegelelement in formschlüssigen Eingriff bringbar ist. Erfindungsgemäß ist vorgesehen, dass die Ausnehmung mit einem zumindest partiell umlaufenden Wulst versehen ist.

Eine weitere beispielhafte Gleitschiene für einen Fahrzeugsitz ist aus der DE 10 2011 051 490 A1 bekannt.

### Aufgabe

Der Erfindung liegt die Aufgabe zu Grunde, einen Längseinsteller eingangs genannter Art zu verbessern, insbesondere eine optimierte Ausformung und Ausgestaltung von Befestigungen für Endkappen zu ermöglichen, sowie einen entsprechenden Fahrzeugsitz bereitzustellen.

### Lösung

Diese Aufgabe wird erfindungsgemäß gelöst durch einen Längseinsteller, insbesondere für einen Fahrzeugsitz, aufweisend mindestens ein Sitzschienenpaar, welches aus einer unteren Sitzschiene und einer relativ zur unteren Sitzschiene in Längsrichtung verschiebbar geführten oberen Sitzschiene gebildet ist, wobei sich die beiden Sitzschienen des Sitzschienenpaares einander wechselseitig umgreifen, wobei die untere Sitzschiene oder die obere Sitzschiene wenigstens eine Öffnung aufweist, wobei die wenigstens eine Öffnung einen im Wesentlichen rechteckigen Öffnungsquerschnitt aufweist, dessen beiden oberen Eckbereiche je einen Krümmungsabschnitt mit einem sich über dessen Verlauf kontinuierlich ändernden Radius aufweisen.

Dadurch, dass die wenigstens eine Öffnung einen im Wesentlichen rechteckigen Öffnungsquerschnitt aufweist, dessen beiden oberen Eckbereiche je einen Krümmungsabschnitt mit einem sich über dessen Verlauf kontinuierlich ändernden Radius aufweisen, ist eine Kontur einer zur Befestigung von Endkappen vorgesehenen Öffnung bereitgestellt, welche eine im Bereich der Öffnung auftretende Spannung im Material der Sitzschiene reduziert.

Jeder der Krümmungsabschnitte der beiden oberen Eckbereiche bildet wenigstens annäherungsweise eine kerbspannungsminimierte Kontur aus. Ein zwischen den beiden benachbarten oberen Krümmungsabschnitten angeordneter oberer Randabschnitt weist einen geraden Verlauf auf. Der obere Randabschnitt verläuft bevorzugt horizontal.

Die untere Sitzschiene und/oder die obere Sitzschiene kann zwei spiegelsymmetrisch zu einer Ebene senkrecht zur Querrichtung angeordnete Öffnungen aufweisen.

Die wenigstens eine Öffnung kann im Bereich wenigstens einer der beiden Enden in Längsrichtung der unteren Sitzschiene und/oder der oberen Sitzschiene angeordnet sein. Die untere Sitzschiene und/oder die obere Sitzschiene kann im Bereich ihrer beiden Enden in Längsrichtung jeweils wenigstens eine Öffnung aufweisen.

Die wenigstens eine Öffnung kann einen Öffnungsquerschnitt aufweisen, dessen beiden unteren Eckbereiche je einen ersten Radius aufweisen. Ein zweiter Radius, nämlich der Radius der Krümmungsabschnitte, der wenigstens einen Öffnung kann größer sein als ein erster Radius der unteren Eckbereiche der wenigstens einen Öffnung.

Ein zwischen den beiden benachbarten oberen Krümmungsabschnitten angeordneter oberer Randabschnitt kann vergleichsweise schmäler als ein gegenüberliegender unterer Randabschnitt der wenigstens einen Öffnung ausgestaltet sein.

Die wenigstens eine Öffnung kann dazu eingerichtet sein, dass ein Haken einer Abdeckkappe für das jeweilige Ende der unteren Sitzschiene oder oberen Sitzschiene in die wenigstens eine Öffnung eingreift, um die Abdeckkappe an der jeweiligen unteren Sitzschiene oder oberen Sitzschiene zu sichern.

Die Aufgabe wird ferner gelöst durch einen Fahrzeugsitz mit einem Längseinsteller gemäß vorstehender Beschreibung. Der erfindungsgemäße Fahrzeugsitz weist folglich die gleichen Vorteile auf, wie die zuvor beschriebenen Ausgestaltungen des Längseinstellers.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Darstellung eines Fahrzeugsitzes mit einem erfindungsgemäßen Längseinsteller,
- Fig. 2:: eine schematische Darstellung eines Sitzschienenpaares eines aus dem Stand der Technik bekannten Längseinstellers,
- Fig. 3:: eine perspektivische Darstellung einer oberen Sitzschiene des Sitzschienenpaares von Fig. 2,
- Fig. 4:: eine perspektivische Darstellung der oberen Sitzschiene von Fig. 3, im Bereich einer Öffnung,
- Fig. 5:: eine perspektivische Darstellung der oberen Sitzschiene des erfindungsgemäßen Längseinstellers, im Bereich einer Öffnung mit einer montierten Abdeckkappe, und
- Fig. 6:: eine vergrößerte Darstellung von Fig. 5.

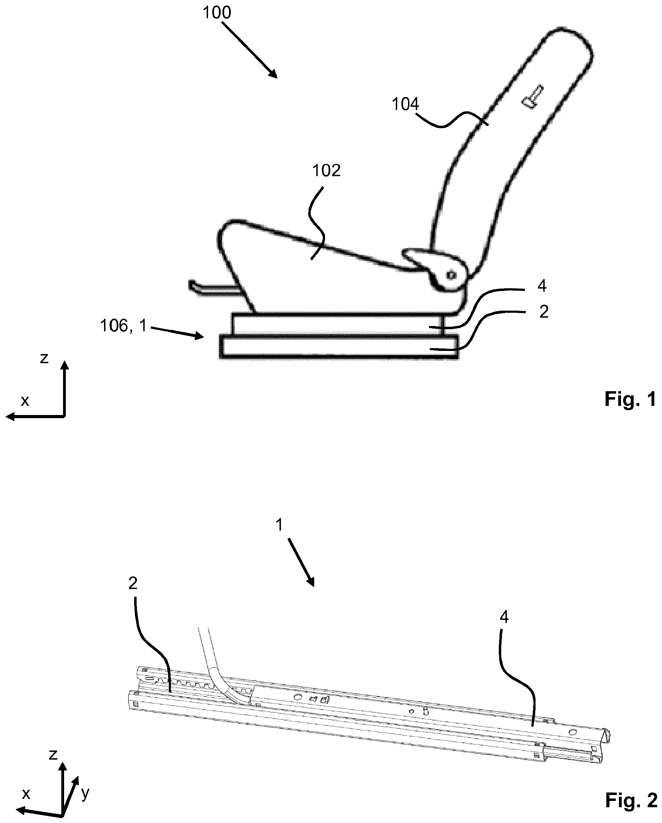

Ein in Figur 1 schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines in einem Sitzteil 102 des Fahrzeugsitzes 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Lehne 104 und wie üblich in Fahrtrichtung ausgerichtet ist. Der erfindungsgemäße Fahrzeugsitz 100 kann jedoch auch in abweichender Ausrichtung, beispielsweise quer zur Fahrtrichtung verbaut werden.

Der in Fig. 1 gezeigte Fahrzeugsitz 100 für ein Kraftfahrzeug weist das Sitzteil 102 und eine relativ zum Sitzteil 102 in ihrer Neigung einstellbare Lehne 104 auf. Eine Neigung der Lehne 104 kann beispielsweise mittels eines Rastbeschlages oder eines Getriebebeschlages einstellbar sein. Der Fahrzeugsitz 100 ist zur Einstellung einer Sitzlängsposition auf einem Längseinsteller 106 montiert.

Die Figuren 2 bis 4 zeigen ein aus dem Stand der Technik bekanntes Sitzschienenpaar 1. Das Sitzschienenpaar 1 ist aus einer oberen Sitzschiene 4, welche auch als Oberschiene bezeichnet werden kann, und einer unteren Sitzschiene 2, welche auch als Unterschiene bezeichnet werden kann, gebildet. In einem zwischen der unteren Sitzschiene 2 und der oberen Sitzschiene 4 gebildeten Hohlraum kann eine Verriegelungseinrichtung angeordnet sein. Die Verriegelungseinrichtung ist mittels eines Betätigungshebels betätigbar. Grundlegend sind ein Aufbau und eine Funktion von Vorrichtungen zum Betätigen der Verriegelungseinrichtung, insbesondere zum Bewegen einer Verriegelungsplatte der Verriegelungseinrichtung in eine Entriegelungsstellung oder eine Verriegelungsstellung, bekannt. Insofern sei beispielhaft auf die DE 10 2010 049 542 A1 sowie die DE 10 2014 219 868 A1 verwiesen, deren diesbezüglicher Offenbarungsgehalt ausdrücklich mit einbezogen wird.

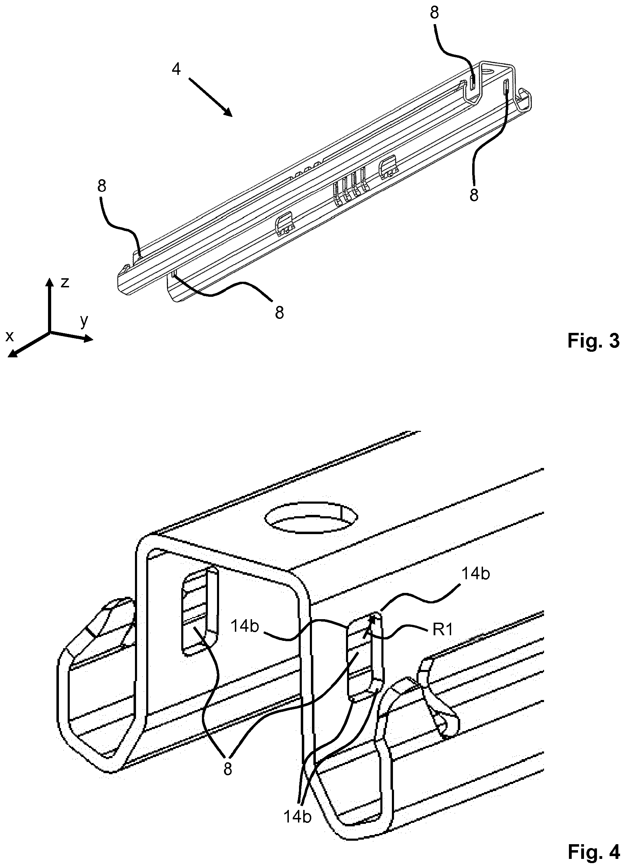

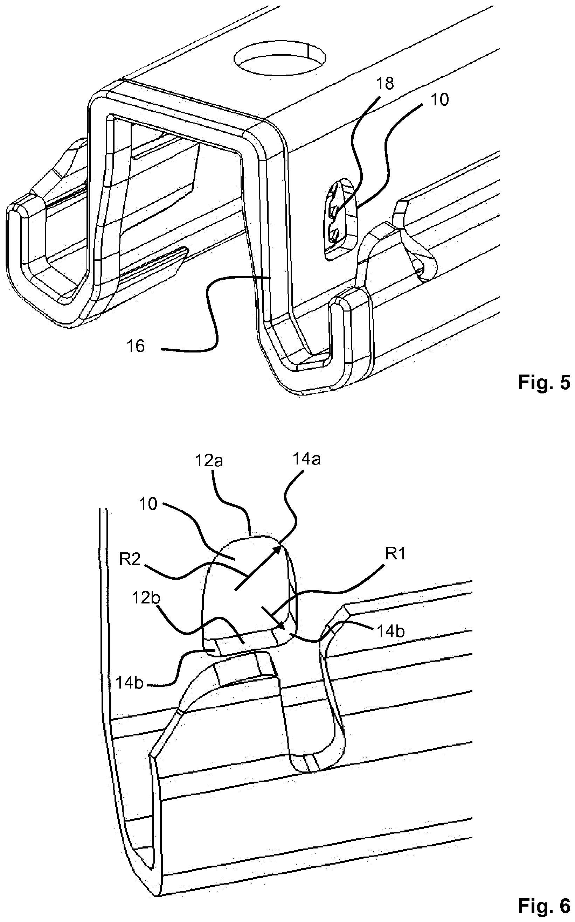

In Fig. 3 ist die obere Sitzschiene 4 des Sitzschienenpaares 1 gezeigt. Die obere Sitzschiene 4 weist im Bereich ihrer beiden Enden in Längsrichtung x in den im Wesentlichen vertikal verlaufenden Flanken jeweils eine Öffnung 8 auf. Wie in Fig. 5 gezeigt, sind die Öffnungen 8, 10 dazu eingerichtet, dass ein Haken 18 einer Abdeckkappe 16 für die Enden der oberen Sitzschiene 4 in jeweils eine Öffnung 8, 10 eingreift, um die Abdeckkappe 16 an der oberen Sitzschiene 4 zu sichern. Die Abdeckkappe 16 verkleidet die Stirnseite eines Endbereichs der unteren Sitzschiene 2 oder oberen Sitzschiene 4. Die Abdeckkappe 16 hat eine ästhetische Funktion und schützt zudem vor Verletzungen.

Fig. 4 zeigt eine aus dem Stand der Technik bekannte Öffnung 8 in der oberen Sitzschiene 4. Die Öffnungen 8 sind bevorzugt im Bereich wenigstens einer der beiden Enden der oberen Sitzschiene 4 angeordnet. Die Öffnung 8 weist einen im Wesentlichen rechteckigen Öffnungsquerschnitt auf, welcher abgerundete Eckbereiche 14b aufweist. Die abgerundeten Eckbereiche 14b der Öffnung 8 weisen allesamt eine Krümmung mit einem ersten Radius R1 auf.

In Fig. 5 ist eine Öffnung 10 in einer oberen Sitzschiene 4 eines erfindungsgemäßen Längseinstellers 106 gezeigt. Die Öffnungen 10 sind dazu eingerichtet, dass ein Haken 18 einer Abdeckkappe 16 für die Enden der oberen Sitzschiene 4 in jeweils eine Öffnung 10 eingreift, um die Abdeckkappe 16 an der oberen Sitzschiene 4 zu sichern. Die Öffnung 10 ist in Fig. 6 vergrößert dargestellt. Die vorliegend beispielhaft gezeigte obere Sitzschiene 4 weist stets zwei paarweise, in Querrichtung y symmetrisch zueinander angeordnete Öffnungen 10 auf. Die paarweise angeordneten Öffnungen 10 sind ferner bevorzugt in Längsrichtung x betrachtet im Bereich der beiden Enden der oberen Sitzschiene 4 angeordnet. Dies kann ebenfalls auf eine weitere Anordnung von Öffnungen 10 in einer unteren Sitzschiene 2 zutreffen.

Die Öffnungen 10 weisen je einen Öffnungsquerschnitt auf, dessen beiden oberen Eckbereiche je in einem Krümmungsabschnitt 14a mit einem sich über dessen Verlauf kontinuierlich ändernden zweiten Radius R2 verlaufen. Folglich verlaufen die Krümmungsabschnitte 14a nicht entlang eines Kreisabschnitts, sondern entlang einer von einer von einem Kreisabschnitt abweichenden Kurve. Die Krümmungsabschnitte 14a können einen Verlauf einer Parabel aufweisen. Der Öffnungsquerschnitt der Öffnungen 10 weist bei den beiden unteren Eckbereichen 14b je einem ersten Radius R1 auf. Ein zwischen den beiden benachbarten oberen Krümmungsabschnitten 14a angeordneter in Vertikalrichtung z oberer Randabschnitt 12a ist schmäler als ein gegenüberliegender in Vertikalrichtung z unterer Randabschnitt 12b der wenigstens einen Öffnung 10. Der obere Randabschnitt 12a der Öffnungen 10 zwischen den beiden benachbarten oberen Krümmungsabschnitten 14a ist schmäler, bzw. kürzer, als ein oberer Randabschnitt der Öffnungen 8. Der sich über seinen Verlauf kontinuierlich ändernde zweite Radius R2 ist in allen Bereichen der Krümmungsabschnitte 14a der Öffnungen 10 ist größer als der erste Radius R1 der unteren Eckbereiche 14b der Öffnungen 10.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Sitzschienenpaar
- 2: untere Sitzschiene
- 4: obere Sitzschiene
- 8: Öffnung
- 10: Öffnung
- 12a: oberer Randabschnitt
- 12b: unterer Randabschnitt
- 14a: Krümmungsabschnitt
- 14b: Eckbereich
- 16: Abdeckkappe
- 18: Haken

- 100: Fahrzeugsitz
- 102: Sitzteil
- 104: Lehne
- 106: Längseinsteller

- R1: Radius
- R2: Radius

- x: Längsrichtung
- y: Querrichtung
- z: Vertikalrichtung

## Patentansprüche

1. Längseinsteller (106), insbesondere für einen Fahrzeugsitz, aufweisend mindestens ein Sitzschienenpaar (1), welches aus einer unteren Sitzschiene (2) und einer relativ zur unteren Sitzschiene (2) in Längsrichtung (x) verschiebbar geführten oberen Sitzschiene (4) gebildet ist, wobei sich die beiden Sitzschienen (2, 4) des Sitzschienenpaares (1) einander wechselseitig umgreifen, wobei die untere Sitzschiene (2) oder die obere Sitzschiene (4) wenigstens eine Öffnung (10), insbesondere in einer Seitenwand, aufweist, **dadurch gekennzeichnet,**
**dass** die wenigstens eine Öffnung (10) einen im Wesentlichen rechteckigen Öffnungsquerschnitt aufweist, dessen beiden oberen Eckbereiche je einen Krümmungsabschnitt (14a) mit einem sich über dessen Verlauf kontinuierlich ändernden Radius (R2) aufweisen.

2. Längseinsteller (106) gemäß Anspruch 1, wobei jeder der Krümmungsabschnitte (14a) der beiden oberen Eckbereiche wenigstens annäherungsweise eine kerbspannungsminimierte Kontur ausbildet.

3. Längseinsteller (106) gemäß einem der Ansprüche 1 oder 2, wobei ein zwischen den beiden benachbarten oberen Krümmungsabschnitten (14a) angeordneter oberer Randabschnitt (12a) einen geraden Verlauf aufweist.

4. Längseinsteller (106) gemäß einem der Ansprüche 1 bis 3, wobei die untere Sitzschiene (2) zwei spiegelsymmetrisch zu einer Ebene senkrecht zur Querrichtung (y) angeordnete Öffnungen (10) aufweist.

5. Längseinsteller (106) gemäß einem der Ansprüche 1 bis 4, wobei die obere Sitzschiene (4) zwei spiegelsymmetrisch zu einer Ebene senkrecht zur Querrichtung (y) angeordnete Öffnungen (10) aufweist.

6. Längseinsteller (106) gemäß einem der Ansprüche 1 bis 5, wobei die wenigstens eine Öffnung (10) im Bereich wenigstens einer der beiden Enden der unteren Sitzschiene (2) angeordnet ist.

7. Längseinsteller (106) gemäß einem der Ansprüche 1 bis 6, wobei die wenigstens eine Öffnung (10) im Bereich wenigstens einer der beiden Enden der oberen Sitzschiene (4) angeordnet ist.

8. Längseinsteller (106) gemäß einem der Ansprüche 6 oder 7, wobei die untere Sitzschiene (2) im Bereich ihrer beiden Enden jeweils wenigstens eine Öffnung (10) aufweist.

9. Längseinsteller (106) gemäß einem der Ansprüche 6 bis 8, wobei die obere Sitzschiene (4) im Bereich ihrer beiden Enden jeweils wenigstens eine Öffnung (10) aufweist.

10. Längseinsteller (106) gemäß einem der Ansprüche 1 bis 9, wobei die wenigstens eine Öffnung (10) einen Öffnungsquerschnitt aufweist, dessen beiden unteren Eckbereiche (14b) je einen ersten Radius (R1) aufweisen.

11. Längseinsteller (106) gemäß Anspruch 10, wobei der sich über seinen Verlauf kontinuierlich ändernde zweite Radius (R2) in allen Bereichen der Krümmungsabschnitte (14a) der wenigstens einen Öffnung (10) größer als der erste Radius (R1) der unteren Eckbereiche (14b) der wenigstens einen Öffnung (10) ist.

12. Längseinsteller (106) gemäß einem der Ansprüche 1 bis 11, wobei ein zwischen den beiden benachbarten oberen Krümmungsabschnitten (14a) angeordneter oberer Randabschnitt (12a) schmäler als ein gegenüberliegender zwischen den beiden benachbarten unteren Krümmungsabschnitten (14b) angeordneter unterer Randabschnitt (12b) der wenigstens einen Öffnung (10) ausgestaltet ist.

13. Längseinsteller (106) gemäß einem der Ansprüche 1 bis 12, wobei die wenigstens eine Öffnung (10) zur Aufnahme eines Hakens (18) einer Abdeckkappe (16) für das Ende der unteren Sitzschiene (2) dient, wobei der Haken (18) in die wenigstens eine Öffnung (10) eingreift, um die Abdeckkappe (16) an der unteren Sitzschiene (2) zu sichern.

14. Längseinsteller (106) gemäß einem der Ansprüche 1 bis 13, wobei die wenigstens eine Öffnung (10) zur Aufnahme eines Hakens (18) einer Abdeckkappe (16) für das Ende der oberen Sitzschiene (4) dient, wobei der Haken (18) in die wenigstens eine Öffnung (10) eingreift, um die Abdeckkappe (16) an der oberen Sitzschiene (4) zu sichern.

15. Fahrzeugsitz (100) mit einem Längseinsteller (106) nach einem der vorhergehenden Ansprüche.

## Claims

1. Longitudinal adjuster (106), in particular for a vehicle seat, having
at least one pair of seat rails (1), which is formed from a lower seat rail (2) and an upper seat rail (4), which is guided displaceably in the longitudinal direction (x) relative to the lower seat rail (2), wherein the two seat rails (2, 4) of the pair of seat rails (1) engage mutually around one another, wherein the lower seat rail (2) or the upper seal rail (4) has at least one opening (10), in particular in a side wall,
**characterized in that**
the at least one opening (10) has a substantially rectangular opening cross section, the two upper corner regions of which each have a curvature portion (14a) having a radius (R2) which continuously changes over its course.

2. Longitudinal adjuster (106) according to Claim 1, wherein each of the curvature portions (14a) of the two upper corner regions at least approximately forms a contour which is minimized in terms of notch stress.

3. Longitudinal adjuster (106) according to either of Claims 1 and 2, wherein an upper edge portion (12a) arranged between the two adjacent upper curvature portions (14a) has a rectilinear profile.

4. Longitudinal adjuster (106) according to one of Claims 1 to 3, wherein the lower seat rail (2) has two openings (10) arranged mirror-symmetrically with respect to a plane perpendicular to the transverse direction (y).

5. Longitudinal adjuster (106) according to one of Claims 1 to 4, wherein the upper seat rail (4) has two openings (10) arranged mirror-symmetrically with respect to a plane perpendicular to the transverse direction (y).

6. Longitudinal adjuster (106) according to one of Claims 1 to 5, wherein the at least one opening (10) is arranged in the region of at least one of the two ends of the lower seat rail (2).

7. Longitudinal adjuster (106) according to one of Claims 1 to 6, wherein the at least one opening (10) is arranged in the region of at least one of the two ends of the upper seat rail (4).

8. Longitudinal adjuster (106) according to either of Claims 6 and 7, wherein the lower seat rail (2) in each case has at least one opening (10) in the region of its two ends.

9. Longitudinal adjuster (106) according to one of Claims 6 to 8, wherein the upper seat rail (4) in each case has at least one opening (10) in the region of its two ends.

10. Longitudinal adjuster (106) according to one of Claims 1 to 9, wherein the at least one opening (10) has an opening cross section, the two lower corner regions (14b) of which each have a first radius (R1).

11. Longitudinal adjuster (106) according to Claim 10, wherein the second radius (R2), which continuously changes over its course, in all of the regions of the curvature portions (14a) of the at least one opening (10) is larger than the first radius (R1) of the lower corner regions (14b) of the at least one opening (10).

12. Longitudinal adjuster (106) according to one of Claims 1 to 11, wherein an upper edge portion (12a) arranged between the two adjacent upper curvature portions (14a) is configured to be narrower than an opposite lower edge portion (12b) of the at least one opening (10), said lower edge portion being arranged between the two adjacent lower curvature portions (14b).

13. Longitudinal adjuster (106) according to one of Claims 1 to 12, wherein the at least one opening (10) serves for receiving a hook (18) of a covering cap (16) for the end of the lower seat rail (2), wherein the hook (18) engages in the at least one opening (10) in order to secure the covering cap (16) on the lower seat rail (2).

14. Longitudinal adjuster (106) according to one of Claims 1 to 13, wherein the at least one opening (10) serves for receiving a hook (18) of a covering cap (16) for the end of the upper seat rail (4), wherein the hook (18) engages in the at least one opening (10) in order to secure the covering cap (16) on the upper seat rail (4).

15. Vehicle seat (100) having a longitudinal adjuster (106) according to one of the preceding claims.

## Revendications

1. Dispositif de réglage en longueur (106), en particulier pour un siège de véhicule, comprenant au moins une paire de rails de siège (1), laquelle est formée à partir d'un rail de siège inférieur (2) et d'un rail de siège supérieur (4) guidé de manière déplaçable dans la direction longitudinale (x) par rapport au rail de siège inférieur (2), les deux rails de siège (2, 4) de la paire de rails de siège (1) venant en prise réciproquement l'un autour de l'autre, le rail de siège inférieur (2) ou le rail de siège supérieur (4) comprenant au moins une ouverture (10), en particulier dans une paroi latérale,
**caractérisé en ce que**
l'au moins une ouverture (10) présente une section transversale d'ouverture sensiblement rectangulaire, dont les deux régions de coin supérieures présentent respectivement une partie de courbure (14a) dotée d'un rayon (R2) changeant de manière continue sur son tracé.

2. Dispositif de réglage en longueur (106) selon la revendication 1, chacune des parties de courbure (14a) des deux régions de coin supérieures formant au moins approximativement un contour minimisant les contraintes d'entaille.

3. Dispositif de réglage en longueur (106) selon l'une des revendications 1 ou 2, une partie de bord supérieure (12a) disposée entre les deux parties de courbure (14a) supérieures adjacentes présentant un tracé rectiligne.

4. Dispositif de réglage en longueur (106) selon l'une des revendications 1 à 3, le rail de siège inférieur (2) comprenant deux ouvertures (10) disposées en symétrie miroir par rapport à un plan perpendiculaire à la direction transversale (y).

5. Dispositif de réglage en longueur (106) selon l'une des revendications 1 à 4, le rail de siège supérieur (4) comprenant deux ouvertures (10) disposées en symétrie miroir par rapport à un plan perpendiculaire à la direction transversale (y).

6. Dispositif de réglage en longueur (106) selon l'une des revendications 1 à 5, l'au moins une ouverture (10) étant disposée dans la région d'au moins l'une des deux extrémités du rail de siège inférieur (2).

7. Dispositif de réglage en longueur (106) selon l'une des revendications 1 à 6, l'au moins une ouverture (10) étant disposée dans la région d'au moins l'une des deux extrémités du rail de siège supérieur (4).

8. Dispositif de réglage en longueur (106) selon l'une des revendications 6 ou 7, le rail de siège inférieur (2) comprenant respectivement au moins une ouverture (10) dans la région de ses deux extrémités.

9. Dispositif de réglage en longueur (106) selon l'une des revendications 6 à 8, le rail de siège supérieur (4) comprenant respectivement au moins une ouverture (10) dans la région de ses deux extrémités.

10. Dispositif de réglage en longueur (106) selon l'une des revendications 1 à 9, l'au moins une ouverture (10) présentant une section transversale d'ouverture dont les deux régions de coin (14b) inférieures présentent respectivement un premier rayon (R1).

11. Dispositif de réglage en longueur (106) selon la revendication 10, le deuxième rayon (R2), changeant de manière continue sur son tracé, dans toutes les régions des parties de courbure (14a) de l'au moins une ouverture (10) étant supérieur au premier rayon (R1) des régions de coin (14b) inférieures de l'au moins une ouverture (10).

12. Dispositif de réglage en longueur (106) selon l'une des revendications 1 à 11, une partie de bord supérieure (12a) disposée entre les deux parties de courbure (14a) supérieures adjacentes étant plus étroite qu'une partie de bord inférieure (12b) opposée de l'au moins une ouverture (10), laquelle partie de bord inférieure est disposée entre les deux parties de courbure (14b) inférieures adjacentes.

13. Dispositif de réglage en longueur (106) selon l'une des revendications 1 à 12, l'au moins une ouverture (10) servant à la réception d'un crochet (18) d'un capuchon de recouvrement (16) pour l'extrémité du rail de siège inférieur (2), le crochet (18) venant en prise dans l'au moins une ouverture (10), afin de fixer le capuchon de recouvrement (16) sur le rail de siège inférieur (2).

14. Dispositif de réglage en longueur (106) selon l'une des revendications 1 à 13, l'au moins une ouverture (10) servant à la réception d'un crochet (18) d'un capuchon de recouvrement (16) pour l'extrémité du rail de siège supérieur (4), le crochet (18) venant en prise dans l'au moins une ouverture (10), afin de fixer le capuchon de recouvrement (16) sur le rail de siège supérieur (4).

15. Siège de véhicule (100) comportant un dispositif de réglage en longueur (106) selon l'une des revendications précédentes.
